# EUROPEAN PATENT SPECIFICATION

(11) **EP 1 733 614 B1**
(45) Date of publication and mention of the grant of the patent: **14.05.2008**
(21) Application number: 06115575.0
(22) Date of filing: 16.06.2006
(51) Int. Cl.: A01G 9/14

(54) **Cultivation trough and nursery provided with a multiple rail system and method for growing a crop in a cultivation trough**
Mehrfach-Schienen-System und Verfahren zum Züchten eines Gewächses in einer Anbauwanne und Gärtnerei mit einer solchen
Bac de culture et une exploitation horticole munie d'un système de plusieurs rails et procédé de culture de plantes dans ce bac

(30) Priority: 17.06.2005 NL 1029287
(43) Date of publication of application: 20.12.2006
(73) Proprietor: W/M Systems B.V., 2661 EP Bergschenhoek (NL)
(72) Inventor: de Jager, Maarten, 2587 TX, DEn Haag (NL); Brugman, Thomas Gerardus, 2715 AN, Zoetermeer (NL)
(74) Representative: van Westenbrugge, Andries

(56) References cited:
- EP-A- 0 314 916
- EP-A- 1 350 429
- EP-A- 1 518 802
- NL-A- 7 708 142
- NL-A- 8 601 534
- US-A- 4 476 651

## Description

The present invention relates to a displaceable cultivation trough according to the preamble of claim 1.

A displaceable cultivation trough of this type is generally known in the art. A substrate can be put into it, in which the crop is grown. It is likewise possible to put a number of pots therein. Cultivation troughs of this type are particularly cheap to produce and are easy to handle at a nursery. They can be designed for optimum utilisation of space with a specific size of crop. Troughs of this type can easily be transported to treatment areas and a large number of cultivation troughs can be placed in a row and, by displacing the last of a row, a very large row of cultivation troughs can be moved through a nursery.

The mutual distance between the cultivation troughs is determined by stops fitted on the frames in question.

However, it has been found that the distance between the cultivation troughs does not have to be the same in all circumstances. In the case of a growing crop it will be understood that at an initial stage of the growth the distance between the cultivation troughs can be chosen as far smaller than at a later stage of the growth. It will likewise be understood that if different varieties of crops are being grown, depending on the size of the crops and their light requirement, as well as many other factors known to the person skilled in the art, there is an optimum distance between the crops, which cannot always be produced on every cultivation trough by the fixed stop as proposed in the state of the art.

EP1350429 discloses a system wherein several troughs are positioned behind each other.

It is the aim of the present invention to make provision for a displaceable cultivation trough with which it is possible in a simple manner to vary the distance from another cultivation trough.

This aim is achieved with a displaceable cultivation trough described above in that there are further stop means, the stop end of which is at a distance (b) from the longitudinal centre point, (a) being greater than (b).

According to the present invention there is more than one stop on each cultivation trough. Depending on the positioning of the cultivation trough in respect of the directly adjacent cultivation trough, only one of the stops becomes active. In this way, by designing the stops with different lengths a different distance between adjacent cultivation troughs can be produced.

However, it is also possible to produce the effect of two different stops by placing the cultivation troughs in turn on two rail systems located side by side, wherein only the first stops come into contact with one another. In this way the (average) mutual centre distance between said cultivation troughs can be halved compared with the situation in which these cultivation troughs are all placed on the same rail system with the first stops in contact with one another. In other words, in some cases that occur the edges or other outer limits of the cultivation trough should likewise be understood as stop means.

The stops can be produced in any way known in the state of the art. It is likewise possible to make provision for temporary stops, as in collapsible stops.

According to an advantageous embodiment of the present invention the mutual positioning of the cultivation troughs comprises displacing each of the cultivation troughs together in the direction of the longitudinal centre line of each of them. In other words, in a first position the first stop means become active, in a second position second stop means, etc. Because the stop means continually have a different distance between two cultivation troughs, it is in principle possible to effect a large number of different mutual distances.

It is also possible to make first stop means of a cultivation trough cooperate with second stop means of a second cultivation trough if the ends of the stop means in question are fitted at the same height, so that they can come into contact with one another.

If the cultivation troughs can move freely over a floor surface, such a construction as described above can easily be designed.

However, in many applications cultivation troughs move over rails in nurseries. In order to make it possible in such a case to set up the cultivation troughs, displaced mutually in the direction of the longitudinal centre line of said cultivation troughs, according to a further aspect of the present invention a nursery is proposed provided with a rail system for moving trolleys, such as cultivation troughs, across it, said rail system comprising two first rails spaced apart, which define a track width between them, wherein, as well as said first rails, second rails are provided, said second rails defining the same track width between them.

By preferably always fitting two rails, located directly side by side, of two different rail systems located side by side, one of the cultivation troughs of two cultivation troughs adjacent to one another can be placed on the first rail system and the other cultivation trough on the second rail system with a slight displacement in the direction of the longitudinal centre of the cultivation trough. It is also possible to place both cultivation troughs on either the first or the second rail system. In this way either the first stop means or the second stop means become active when the cultivation troughs in question are moved towards one another. The mutual displacement between the cultivation troughs in the direction of the longitudinal centre line thereof is determined by the smallest possible mutual displacement of the rail systems and can be particularly small.

The transfer of a cultivation trough from one rail system to another can be carried out with switches, for example. A far simpler possibility is to use the cross conveyor which is generally present in nurseries and such. With this cross-conveyor the troughs are moved from the end of the rails to a treatment area or such. A conveyor of this type can likewise be used for the small displacement of the cultivation trough in question from the first rail system to the second rail system, for example.

The present invention also relates to a method for growing a crop in a row of cultivation troughs, wherein the cultivation troughs comprise troughs according to one of the claims 1 to 4 and wherein the cultivation troughs are fitted in a first mutual longitudinal position (B) with a first distance (c) and fitted in a second mutual displaced longitudinal position (A) with a second distance (d), (d) being greater than (c).

Depending on the development of the crop or the type of crop being grown, the mutual position of two adjacent cultivation troughs can be changed, in order thus to make provision for a changed mutual distance between the cultivation troughs by activation of the first, second, etc, stop means. In this way, with a comparatively small crop the cultivation troughs can be placed at a small distance from one another, whereby high utilisation of the floor surface is obtained. On further development of the crop, where the distance has to become larger to give the crop sufficient light and opportunities to develop, the distance between two adjacent cultivation troughs can be chosen as larger. Therefore the distance between the cultivation troughs can be chosen depending on the growth stage of the crop and it is not necessary to transfer the crops to differently designed cultivation troughs.

The invention will be explained in more detail below with reference to an illustrative embodiment depicted in the drawings, wherein
Figure 1 shows diagrammatically a glasshouse provided with a cultivation trough and a rail system according to the present invention.
Figure 2 shows a first positioning option (B) of two adjacent cultivation troughs.
Figure 3 shows the mutual position (A) of the cultivation troughs in the longitudinal direction according to a second positioning.

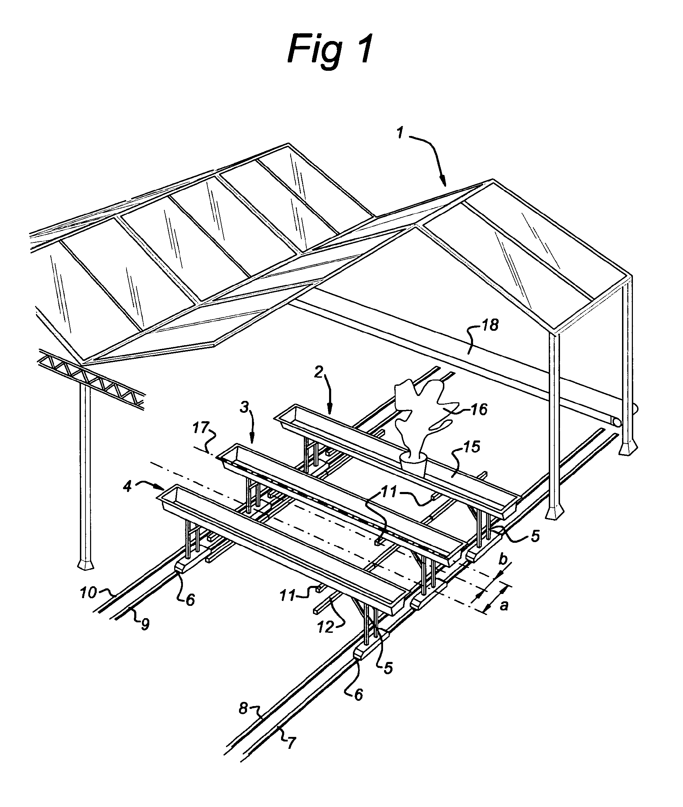

In Figure 1 a glasshouse is indicated by 1. Fitted therein are a number of cultivation troughs 2, 3 and 4. Each cultivation trough consists of a frame 5 on which a trough 15 is fitted. Therein is a crop 16. The frame is also provided with wheels 6, intended to be moved via rails. There are first stops 12, wherein the stop face of the stops 12 is located at a distance a from the centre line 17 of the trough 15. There are second stops 11, the distance from the centre line 17 being indicated by b. Stops 11 and 12 are fitted at the same height located side by side in the longitudinal direction.

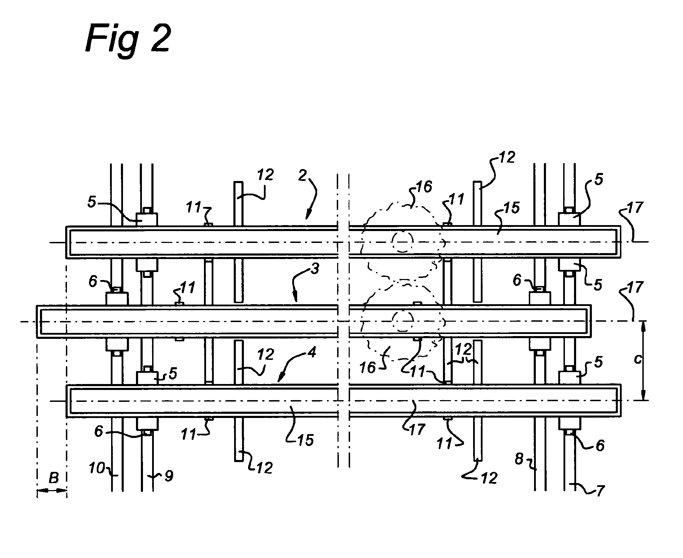

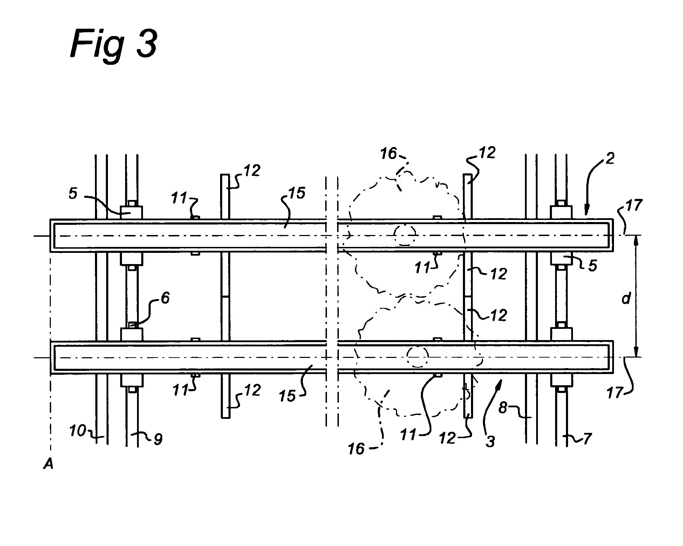

There is a cross conveyor 18. Adjoining this, extending perpendicular are rails 7, 8, 9 and 10. Rails 7, 9 form a first rail system with a track width which is the same as the track width of the second rail system, which is formed by rails 8 and 10. The second rail system 8, 10 is a small distance from the first rail system 9, 7.This can also be seen from Figures 2 and 3.

Figure 2 shows in top view the situation where the cultivation troughs 2, 3, 4 are fitted closer to one another. This is produced in that adjacent cultivation troughs 2, 3; 3, 4 always run in a different rail system. From Figure 2 it can be seen that cultivation trough 2 runs in rail system 7, 9, whereas cultivation trough 3 runs in rail system 8, 10. In this way adjacent cultivation troughs 2, 3 or 3, 4 are fitted displaced in respect of one another over a distance B.

This distance can be comparatively small and amounts to at the most a few tens of centimetres over a length of the cultivation troughs of 16 metres, for example. In other words, this displacement is negligible in the longitudinal direction.

However, this displacement does have the effect that stops 12 of adjacent cultivation troughs 2, 3 or 3, 4 no longer become active. Stop 11 of cultivation trough 2 will now come to rest against stop 12 of cultivation trough 3 and stop 12 of cultivation trough 3 will come into engagement with stop 11 of cultivation trough 4. It is to be understood that the various features can also be the other way round.

Figure 3 shows in top view the situation where adjacent cultivation troughs 2, 3 are fitted on the same rail system 7, 9 or 8, 10. In such a case the first stops 12 are the first to come into contact with one another when the cultivation troughs 2, 3 are moved towards one another and a distance d between the longitudinal centre lines 17 of the adjacent cultivation troughs is thus limited. A similar situation is suitable if a large quantity of a crop is being grown in a simple manner or a crop which requires a great deal of space, such as a crop in later development. A indicates the level position of the ends of the cultivation troughs.

It is also to be understood that more than two rail systems can be fitted in order to make provision for more than two mutual distances between adjacent cultivation troughs.

As can be seen from Figure 2, when the stops 12 and 11 come into contact the centre-to-centre distance of adjacent cultivation troughs ends up as c, in other words considerably smaller than d as shown in Figure 3. This situation is chosen for comparatively small crops where the cultivation troughs can be placed close together.

The longitudinal displacement of the cultivation troughs, in other words, for example, the displacement of cultivation trough 2 of rail system 7, 9 towards rail system 8, 10 can be produced by simply moving the cultivation trough in question along rail system 7, 9 towards the cross conveyor 18 and then displacing it over a small distance at an equal width from the longitudinal centre line 17 and then moving it back along a rail system 8, 10. In practice the fitting of the cultivation troughs, whether or not staggered, will be produced after a treatment in a treatment area, for example, wherein the cultivation troughs are delivered back to the growing area via the cross conveyor 18.

After the above, further changes which are obvious after reading this description will clearly occur to those skilled in the state of the art. Varying the mutual distance between two cultivation troughs by varying the length of the stops in question can be done in a great many ways. Changes of this type are all considered to be within the range of the appended claims.

## Claims

1. Displaceable cultivation trough (2-4) comprising a frame (5) provided with a trough (15) for containing crops (16) and provided with wheels (6) for displacing said trough, wherein the frame is provided with first stop means (12), the stop end of which extends at a distance (a) from the longitudinal centre line (17) of said cultivation trough, **characterised in that** there are further stop means (11), the stop end of which is located at a distance (b) from said longitudinal centre line (17), (a) being greater than (b).

2. Displaceable Cultivation trough according to Claim 1, wherein the first and further stop end are spaced from one another in the direction of the longitudinal centre line (17).

3. Displaceable Cultivation trough according to one of the preceding claims, wherein the first and further stop end are arranged substantially at the same height.

4. Displaceable Cultivation trough according to one of the preceding claims, wherein said stop means are fitted on the frame.

5. Assembly comprising a nursery (1) and displaceable cultivation troughs, wherein said nursery is provided with a rail system (7-10) for displacing cultivation troughs (2-4) across it, wherein the rail system comprises two first rails (7, 9) located apart, which define a track width between them, wherein, adjacent to said first rails (7, 9), second rails (8, 10) are provided, the second rails defining the same track width between them, and said cultivation troughs comprise throughs according to one of the preceding claims.

6. Assembly according to Claim 5, wherein the first and second rails lead to a cross conveyor (18).

7. Assembly provided with a rail system according to Claim 5 or 6 and displaceable cultivation troughs according to one of Claims 1 to 4, wherein the distance between the first and second stop means corresponds to the distance between the first and second rails.

8. Method for growing a crop in a row of cultivation troughs, wherein the cultivation troughs comprise trough according to one of the claims 1-4, said troughs being arranged in a first mutual longitudinal position (B) at a first distance (c) and in a second mutual displaced longitudinal position (A) at a second distance (d), (d) being greater than (c).

9. Method according to Claim 8, wherein the displacement of longitudinal position (B) towards longitudinal position (A) comprises the displacement of a cultivation troughs perpendicular to the longitudinal centre line of the cultivation trough along a guide to the end of the guide, displacing the cultivation trough parallel to the longitudinal centre line of the cultivation trough and displacing the cultivation trough back along a further guide of the cultivation trough in a direction perpendicular to the longitudinal centre line.

10. Method according to Claim 8 or 9, wherein in the first mutually displaced longitudinal position (B) of the cultivation troughs, a smaller crop is put in said cultivation troughs and in the further position (A) a larger crop is put in said cultivation trough.

## Patentansprüche

1. Verschiebbare Zuchtwanne (2 - 4), bestehend aus einem Gestell (5), das mit einer Wanne (15) zur Aufnahme von Gewächsen (16) und mit Rädern (6) zur Verschiebung der Wanne versehen ist, wobei das Gestell erste Anschlagmittel (12) umfasst, deren Anschlag sich in einem Abstand (a) zur Längsachse (17) der Anbauwanne befindet, **dadurch gekennzeichnet, dass** weitere Anschlagmittel (11) vorgesehen sind, deren Anschlag sich in einem Abstand (b) zur Längsachse (17) befindet, wobei (a) größer als (b) ist.

2. Verschiebbare Zuchtwanne nach Anspruch 1, **dadurch gekennzeichnet, dass** der erste und der weitere Anschlag in Richtung der Längsachse (17) von einander beabstandet sind.

3. Verschiebbare Zuchtwanne nach einem der vorhergehenden Ansprüche, **dadurch gekennzeichnet, dass** der erste und der weitere Anschlag sich auf annähernd gleicher Höhe befinden.

4. Verschiebbare Zuchtwanne nach einem der vorhergehenden Ansprüche, **dadurch gekennzeichnet, dass** die Anschlagmittel am Gestell angebracht sind.

5. Anlage mit einer Gärtnerei (1) und verschiebbaren Zuchtwannen, wobei die Gärtnerei mit einem Schienensystem (7 - 10) zur Verschiebung der Zuchtwannen (2 - 4) versehen ist, wobei das Schienensystem zwei erste von einander beabstandete Schienen (7, 9) mit einer Spurweite umfasst, wobei benachbart zu den ersten Schienen (7, 9) zweite Schienen (8, 10) mit gleicher Spurweite angeordnet sind und die Zuchtwannen Wannen nach einem der vorhergehenden Ansprüche umfassen.

6. Anlage nach Anspruch 5, wobei die ersten und zweiten Schienen zu einem Querförderer (18) führen.

7. Anlage mit einem Schienensystem nach Anspruch 5 oder 6 und verschiebbaren Zuchtwannen nach einem der Ansprüche 1 bis 4, wobei der Abstand zwischen den ersten und zweiten Anschlägen dem Abstand zwischen den ersten und zweiten Schienen entspricht.

8. Verfahren zum Züchten eines Gewächses in einer Reihe von Zuchtwannen, wobei die Zuchtwannen in eine Wanne nach einem der Ansprüche 1 bis 4 umfassen, wobei die Wannen einer ersten gegenseitigen Längsposition (B) in einem ersten Abstand (c) und in einer zweiten gegenseitigen Längsposition (A) in einem zweiten Abstand (d) zueinander angeordnet sind, wobei (d) größer als (c) ist.

9. Verfahren nach Anspruch 8, wobei die Verschiebung von Längsposition (B) nach Längsposition (A) die Verschiebung einer Zuchtwanne senkrecht zur Längsachse der Zuchtwanne entlang einer Führung bis zum Ende der Führung, die Verschiebung der Zuchtwanne parallel zur Längsachse der Zuchtwanne und die Verschiebung der Zuchtwanne zurück in eine Richtung senkrecht zur Längsachse entlang einer weiteren Führung der Zuchtwanne umfasst.

10. Verfahren nach Anspruch 8 oder 9, wobei in der ersten gegenseitig zueinander versetzten Längsposition (B) der Zuchtwannen ein kleineres Gewächs in die Zuchtwannen gepflanzt wird, und in der weiteren Längsposition (A) ein größeres Gewächs in die Zuchtwanne gepflanzt wird.

## Revendications

1. Bac de culture déplaçable (2-4) comprenant un châssis (5) doté d'un bac (15) destiné à contenir des cultures (16) et doté de roues (6) pour déplacer ledit bac, dans lequel le châssis est doté de premiers moyens de butée (12), dont l'extrémité de butée s'étend à une distance (a) de l'axe central longitudinal (17) dudit bac de culture, **caractérisé en ce qu'**il existe d'autres moyens de butée (11), dont l'extrémité de butée est située à une distance (b) dudit axe central longitudinal (17), (a) étant supérieure à (b).

2. Bac de culture déplaçable selon la revendication 1, dans lequel la première extrémité de butée et l'autre extrémité de butée sont espacées l'une de l'autre dans la direction de l'axe central longitudinal (17).

3. Bac de culture déplaçable selon l'une des revendications précédentes, dans lequel la première extrémité de butée et l'autre extrémité de butée sont agencées sensiblement à la même hauteur.

4. Bac de culture déplaçable selon l'une des revendications précédentes, dans lequel lesdits moyens de butée sont fixés sur le châssis.

5. Ensemble comprenant une pépinière (1) et des bacs de culture déplaçables, dans lequel ladite pépinière est dotée d'un système de rail (7-10) pour déplacer les bacs de culture (2-4) à travers elle, dans lequel le système de rail comprend deux premiers rails (7, 9) espacés, qui définissent une largeur de piste entre eux, dans lequel, de façon adjacente auxdits premiers rails (7, 9), sont prévus des seconds rails (8, 10), les seconds rails définissant la même largeur de piste entre eux, et lesdits bacs de culture comprennent des bacs selon l'une des revendications précédentes.

6. Ensemble selon la revendication 5, dans lequel les premiers et seconds rails conduisent à un transporteur transversal (18).

7. Ensemble doté d'un système de rail selon la revendication 5 ou 6 et de bacs de culture déplaçables selon l'une des revendications 1 à 4, dans lequel la distance entre les premiers et seconds moyens de butée correspond à la distance entre les premiers et seconds rails.

8. Procédé consistant à pratiquer une culture dans une rangée de bacs de culture, dans lequel les bacs de culture comprennent des bacs selon l'une des revendications 1 à 4, lesdits bacs étant agencés dans une première position longitudinale mutuelle (B) à une première distance (c) et dans une seconde position longitudinale déplacée mutuelle (A) à une seconde distance (d), (d) étant supérieure à (c).

9. Procédé selon la revendication 8, dans lequel le déplacement de la position longitudinale (B) vers la position longitudinale (A) comprend le déplacement d'un bac de culture perpendiculairement à l'axe central longitudinal du bac de culture le long d'un guide vers l'extrémité du guide, le déplacement du bac de culture parallèlement à l'axe central longitudinal du bac de culture et le déplacement du bac de culture de retour le long d'un autre guide du bac de culture dans une direction perpendiculaire à l'axe central longitudinal.

10. Procédé selon la revendication 8 ou 9, dans lequel dans la première position longitudinale mutuellement déplacée (B) des bacs de culture, une plus petite culture est placée dans lesdits bacs de culture et dans l'autre position (A), une plus grande culture est placée dans ledit bac de culture.
